Europäisches Patentamt

(19) European Patent Office

Office européen des brevets

(11) Numéro de publication: **0 039 261**
**B1**

(12) **FASCICULE DE BREVET EUROPEEN**

(45) Date de publication du fascicule du brevet: **28.09.83**

(51) Int. Cl.³: **C 08 L 71/06, B 32 B 27/00**

(21) Numéro de dépôt: **81400511.2**

(22) Date de dépôt: **31.03.81**

(54) Matériaux stratifiés borés à base de résine phénolique.

(30) Priorité: **24.04.80 FR 8009192**

(43) Date de publication de la demande:
**04.11.81 Bulletin 81/44**

(45) Mention de la délivrance du brevet:
**28.09.83 Bulletin 83/39**

(84) Etats contractants désignés:
**AT BE CH DE GB IT LI LU NL SE**

(56) Documents cités:
**EP - A - 0 006 373**
**EP - A - 0 015 785**
**FR - A - 1 230 618**
**FR - A - 2 250 796**
**FR - A - 2 426 559**

(73) Titulaire: **SOCIETE CHIMIQUE DES CHARBONNAGES SA**
**Tour Aurore Cédex 5**
**F-92080 Paris la Défense 2 (FR)**

(72) Inventeur: **Cousin, Michel**
**81, rue Wattier**
**F-62218 Loison Sous Lens (FR)**
Inventeur: **Meyer, Nicolas**
**1, boulevard de La Salle des Fêtes**
**F-62160 Bully les Mines (FR)**

(74) Mandataire: **Rieux, Michel et al,**
**Tour Aurore Service Propriété Industrielle Place des Reflets Cédex 5**
**F-92080 Paris La Défense (FR)**

Materiaux stratifiés borés à base de résine phénolique

La présente invention concerne des matériaux stratifiés à base de résine phénolique armée d'un renfort, elle a plus particulièrement pour objet des matériaux stratifiés borés et leur procédé de préparation. Les matériaux stratifiés sont des matériaux comportant en alternance plusieurs couches successives de résine et de renfort. Ils sont en particulier décrits das l'"Encyclopedia of Polymer Science and Technology" Interscience publishers 1970, Volume 12 page 1 "Reinforced Plastics" et Volume 8 page 121 "Laminates". Ces matériaux sont préparés à partir d'une résine phénolique que l'on durcit à l'aide d'un catalyseur acide, et de renforts divers à l'état de fibres telles que fibres cellulosiques ou de verre, de non-tissé par exemple polyester de haut poids moléculaire, de mat ou de tissu par exemple mat de verre ou d'amiante.

Les matériaux stratifiés ainsi obtenus présentent un mauvais aspect de surface par suite en particulier de l'utilisation de fibres qui marquent la surface en laissant apparaître leur empreinte. Dans le but de masquer ces défauts et d'obtenir des matériaux présentant un bel état de surface on a proposé de préparer des stratifiés renforcés en déposant une couche de résine sur la surface d'un moule. Cette dernière couche est généralement appelée "gel coat". En particulier, on a décrit dans la demande européenne publiée sous le numéro 0015785 et déposée le 9 Janvier 1980 par la Demanderesse des matériaux stratifiés à base de résine phénolique armée d'un renfort et comportant sur au moins une de leurs faces une couche d'une composition à base de résine furannique directement en contact avec la résine phénolique armée. La résine furannique donnant un matériau présentant une surface colorée en noir, on peut comme décrit dans la demande précitée mettre en contact la ou les couches de résine furannique avec une composition à base d'une autre résine thermodurcissable en particulier à base d'une résine polyester. Un tel matériau est fabriqué en déposant sucessivement au fond d'un moule une couche de la résine de polyester mélangée à un catalyseur de durcissement, puis une couche de résine furannique, et une résine phénolique avec son renfort, les résines furanniques et phénoliques étant durcies à l'aide de catalyseurs acides classiques: minéraux ou organiques tels que acide paratoluène sulfonique.

Si les matériaux stratifiés obtenus dans la demande précitée, ceux en particulier qui comportent un gel-coat polyester, présentent à la fois un bel aspect de surface et la teinte désirée, ils ont l'inconvénient de ne possédor qu'un comportement au feu médiocre qui correspond uniquement au classement au feu de ce "gel-coat". C'est ainsi que par exemple les matériaux stratifiés comportant un "gel-coat" polyester, une résine furannique et une résine phénolique, ces deux dernières étant durcies à l'aide de catalyseurs acides classiques sont du point de la réaction au feu, mesurée à l'épiradiateur selon la méthode d'Essais décrite dans le Journal Officiel du 26 juillet 1973 (décret du 4 juin 1973) classés M 3, c'est-à-dire qu'ils sont "moyennement inflammables".

On a maintenant trouvé des matériaux stratifiés à base de résine phénolique armée d'un renfort, revêtus sur l'une ou leurs deux faces d'une composition de résine furannique en contact avec un revêtement à base d'une résine polyester insaturée qui présentent un comportement au feu amélioré.

La présente invention concerne des matériaux stratifiés à base de résine phénolique armée d'un renfort comportent sur une ou les deux faces une couche d'une composition à base de résine furannique en contact avec une résine thermodurcissable constituée d'une résine de polyester insaturé caractérisé en ce que la résine furannique durcie contient du bore.

On a en effet constaté que la présence de bore dans la résine furannique améliorait de façon notable le classement au feu d'un matériau stratifié. Ainsi un gel-coat de polyester classique qui présente un classement au feu M3 mesuré à l'épiradiateur selon la méthode d'essais décrite dans le décret du 4 juin 1973 (Norme NFP 92501) et qui est en contact avec une résine furannique permet d'obtenir un matériau stratifié présentant globalement un classement M 1, c'est-à-dire non inflammable, à condition que la résine furannique soit borée. De façon surprenante la demanderesse a constaté que le bore introduit dans la résine furannique séjournait pratiquement en totalité dans la résine furannique tout en manifestant son effet sur le gel-coat polyester. Tout se passe comme si le bore agissait à distance.

L'amélioration du comportement au feu du matériau stratifié dépend de la quantité de bore présent dans la résine furannique et du classement au feu initial du gel-coat polyester.

Ainsi par exemple un gel-coat polyester classé M 3 à l'épiradiateur permet d'obtenir un stratifié ayant un classement M 2 à l'épiradiateur lorsque l'on met en oeuvre une très faible quantité de bore, 0,12% en poids dans la résine furannique. Une quantité de bore égale à 0,26% dans la résine furannique permet partant d'un gel-coat polyester classé M 3 à l'épiradiateur d'obtenir un stratifié classé M 1 à l'épiradiateur Il est possible d'introduire des quantités élevées de bore dans la résine furannique. Les quantités de bore ajoutées seront adjustées selon la nature et le classement au feu initial du gel coat polyester.

Les matériaux stratifiés phénoliques objet de l'invention sont fabriqués en particulier selon le procédé décrit dans la demande européenne 0015785 précitée qui consiste à former sur un moule une première couche d'une composition contenant la résine de polyester, cette première couche étant appelée gel-coat, à former ensuite une seconde couche d'une composition à base de résine furannique, à laisser durcir au moins partiellement cette seconde couche puis à former sur cette seconde couche une stratification à l'aide d'une résine phénolique et de renfort. La stratification peut être éventuellement effectuée sur une couche de résine furannique complètement durcie. Les différentes couches de stratification sont réalisées par contact à froid ou à la presse à chaud ou par injection ou par enroulement filamentaire selon des techniques connues.

Les résines furanniques qui conviennent pour la fabrication des stratifiés objet de l'invention sont des résines classiques obtenues par polymérisation de l'alcool furfurylique: le furfural peut éventuellement être ajouté au polymère, en tant que solvant. Ces résines furanniques sont des liquides noirs qui présentent des viscosités comprises entre 0,05 et 15Pa/s(50 et 15000 cps). Selon une caractéristique importante du procédé de l'invention le durcissement de la résine furannique n'est pas réalisé à l'aide de durcisseurs classiques comme les acides organiques sulfoniques ou les acides minéraux forts mais en utilisant la méthode décrite dans la demande déposée le même jour par la demanderesse et intitulée "Nouveaux Catalyseurs convenant pour le durcissement des résines furanniques". Selon cette demande on durcit les résines furanniques en présence d'une solution anhydre concentrée d'anhydride borique contenant au moins 5% en poids d'anhydride borique, un ou plusieurs solvants organiques et au moins un acide concentré: le durcissement à l'aide de ce catalyseur boré permet d'obtenir des stratifiés qui présentent un comportement au feu amélioré.

On peut ajouter à la résine furannique avant durcissement différents adjuvants: charge minérale, agent d'étalement tel que huiles de silicone, agent thixotrope tel que par exemple la silice pyrogénée, la bentonite, les fibres d'amiante chargées à la silice amorphe, solvant par exemple l'acétone.

Les résines phénoliques utilisées sont du type résols: elles sont obtenues par polycondensation en milieu alcalin d'un aldéhyde sur un phénol. Le plus souvent les résols sont obtenus par polycondensation de formol sur le phénol en présence de soude caustique. Le durcissement de la résine phénolique est effectué à l'aide d'un catalyseur acide comme par exemple l'acide chlorhydrique, sulfurique, phosphorique, oxalique, benzénesulfonique, paratoluènesulfonique, phénolsulfonique. La résine phénolique peut contenir différents adjuvants tels que charges, solvants plastifiants. L'addition d'un plastifiant par exemple un polyalcool comme le dipropylèneglycol permet d'obtenir des matériaux stratifiés ayant une meilleure résistance à la flexion. On peut utiliser tous les renforts connus pour les résines phénoliques. On emploie plus particulièrement les renforts à base de fibres de verre. Les résines polyesters qui conviennent pour la fabrication des stratifiés borés selon l'invention sont choisies parmi les résines classiques utilisées dans la technique des revêtements et dans la fabrication des stratifiés. Ces résines sont le produit de la réaction de diacides et de dialcools: on utilise généralement comme diacides les acides isophtalique ou orthophtalique. Ces résines sont le plus souvent à base d'acide isophtalique et contiennent éventuellement du trichloroéthylphosphate et du dioxyde de titane.

Les exemples suivants illustrent la présente invention. Toutes les quantiés sont exprimées en parties en poids.

Exemple 1

Sur un moule traité par un agent de démoulage on applique au pinceau une couche de 0,2 mm d'épaisseur d'une résine de polyester insaturé à base d'acide isophtalique et contenant du trichloréthylphosphate et du dioxyde de titane. Cette résine est durcie à l'aide de peroxydes classifiques et est additionnée de sel de cobalt comme agent accélérateur. Son classement au feu déterminé à l'épiradiateur selon la norme NFP 92501 est M 3 c'est-à-dire qu'il est "moyennement inflammable".

Sur cette couche de résine incomplètement durcie on applique au pinceau un couche de résine furannique de 0,2 mm d'épaisseur composée de:

| | |
|---|---|
| Condensat d'alcool furfurylique en milieu acide (résine QUACCOR 1001 marque déposée de la firme QUAKER OATS) | 100 parties |
| Silice pyrogénée | 2 parties |
| Solution d'anhydride borique constituée de: trimethylborate: 100 parties anhydride borique: 60 parties acide para-toluene: 60 parties sulfonique acide sulfurique: 6 parties | 1,5 partie |

On laisse la couche de résine furannique durcir à température ambiante pendant 20 minutes: la surface est alors légèrement poisseuse. On dépose sur cette couche un mat de fibres de verre puis une résine phénolique obtenue par condensation du formol dans un rapport molaire

$$\frac{FORMOL}{PHENOL} = 1,5$$

et présentant une viscosité de 1 Pa-s à 20°C (10 poises). La résine phénolique est durcie par addition à 100 parties de 10 parties d'une solution aqueuse à 65% en poids d'acide para-toluènesulfonique. On fait pénétrer la résine dans le mat de fibres de verre à l'aide d'un rouleau. Le rapport pondéral

$$\frac{VERRE}{RESINE}$$

est de $\frac{1}{3}$.

On laisse durcir pendant environ 4 heures à température ambiante et on démoule le matériau composite obtenu qui présente côté face polyester un classement au fe M 2 déterminé à l'épiradiateur. C'est-à-dire que le matériau stratifié obtenu est "difficilement inflammable". Le taux de bore dans la résine furannique durcie est de 0,19%.

Exemple 2=Exemple comparatif
L'exemple 1 est répété mais la résine furannique est durci à l'aide d'une solution auquese à 60% d'acide paratoluène-sulfonique: on utilise 3,5 parties de cette solution pour 100 parties de résine furannique. Le stratifié obtenu présente un classement à l'épiradiateur M 3 (c'est-à dire que le stratifié est "moyennement inflammable"): il a donc le même classement au feu que le gel-coat polyester.

Example 3
L'exemple 1 est répété en utilisant dans chaque essai pour le durcissement de la résine furannique un catalyseur boré qui contient des proportions variables d'anhydride borique. Ce catalyseur est également utilisé en quantité variable.

Le durcissement de la résine phénolique est réalisé avec le même catalyseur que celui décrit dans l'exemple 1. Le gel-coat est constitué de la même résine polyester que celle utilisée dans l'exemple 1. Le tableau suivant indique la compostion du catalyseur boré utilisé pour le durcissement de la résine furannique, la pourcentage mis en oeuvre dans la résine furannique, la quantité de bore présente dans la résine furannique durcie et le classement au feu à l'épiradiateur de la face gel-coat polyester du stratifié obtenu.

| N° ESSAI | 1 | 2 | 3 | 4 |
|---|---|---|---|---|
| Calalyseur boré: Triméthyl-borate | 100 | 100 | 100 | 100 |
| Composition pondérale: $B_2O_3$ | 60 | 60 | 60 | 60 |
| acide paratoluène Sulfonique | 60 | 60 | 60 | 60 |
| Acide sulfurique | 0 | 6 | 10 | 12 |
| Taux de catalyseur boré en % de résine furannique | 3,5 | 2 | 1 | 1 |
| Taux de bore dans la résine furannique durcie | 0,475 | 0,26 | 0,12 | 0,11 |
| Classement à l'épiradiateur de la face gel-coat de polyester | M1 | M1 | M2 | M3 |

L'Essai no 3 montre que l'on observe un légère amélioration du comportement au feu de la face gel-coat polyester avec une quantité de bore égale à 0,12%. Dans l'essai no 2 on obtient un classement M1 avec un pourcentage en bore égal à 0,26% dans la résine furannique durcie.

Exemple 4
L'exemple 1 est répété en utilisant un polyester à base d'acide orthophtalique. Ce polyester présente un classement au feu à M4 à l'épiradiateur , c'est-à-dire qu'il est classé "facilement inflammable".

La résine furannique est durcie avec 3,5 parties du même catalyseur boré que dans l'exemple 1. Après application de la résine phélonique et des fibres de verre on obtient un matériau stratifé qui présente un classement au feu M3. La résine furannique durcie contient 0,475% de bore.

### Revendication

Matériaux stratifiés aà base de résine phénolique du type résol, armée d'un renfort comportant sur une ou les deux faces une couche d'une composition à base de résine furannique en contact avec une résine thermodurcissable constituée d'une résine de polyester insaturé caractérisés en ce que la résine furannique durcie contient du bore et qu'elle est durcie en présence d'une solution anhydre concentrée d'anhydride borique contenant au moins 5% en poids d'anhydride borique, un ou plusieurs solvants organiques et au moins un acide concentré.

### Patentanspruch

Schichtmaterialien auf Basis von Phenolharz des Resoltyps, das mit einer Verstärkung armiert ist, die auf einer oder beiden Seiten eine Schicht aus einer Verbindung auf Furanharzbasis in Kontakt mit einem wärmehärtbaren Harz enthält, welches aus einem ungesättigten Polyesterharz besteht, dadurch gekennzeichnet, daß das ausgehärtete Furanharz Bor enthält und in Gegenwart einer wasserfreien konzentrierten Boranhydridlösung, die wenigstens 5 Gew.-% wasserfreies Boranhydrid, ein oder mehrere anorganische Lösungsmittel und wenigstens eine konzentrierte Säure enthält, ausgehärtet wurde.

### Claim

Phenol resin based laminate materials of the resol type reinforced with a stiffener comprising on one or both sides a layer of a furane baked resin in contact with a thermo-setting resin constituted by an unsaturated polyester resin characterised in that the hardened furane resin contains boron and in that it is hardened in the presence of a concentrated anhydrous solution of boron anhydride containing at least 5% by weight of boron anhydride, one or several organic solvents and at least one concentrated acid.